# EUROPÄISCHE PATENTANMELDUNG

(11) **EP 1 782 910 A1**
(43) Veröffentlichungstag der Anmeldung: **09.05.2007**
(21) Anmeldenummer: 06022618.0
(22) Anmeldetag: 30.10.2006
(51) Int. Cl.: B23K 26/32, B29C 65/14

(54) **Vorrichtung zum dauerhaften Verbinden zumindest zweier Bauteile, umfassend wenigstens eine Energiequelle**

(30) Priorität: 02.11.2005 DE 102005052241
(71) Anmelder: SAIA-Burgess Oldenburg GmbH & Co. KG, 26127 Oldenburg (DE)
(72) Erfinder: Koepsell, Martin, 26135 Oldenburg (DE)
(74) Vertreter: Jabbusch, Matthias

(57) **Zusammenfassung**

Bei einer Vorrichtung zum dauerhaften Verbinden zumindest zweier Bauteile (3,4) miteinander, umfassend wenigstens eine Energiequelle (2) zum Bereitstellen einer die Verbindung herstellenden Energie, ist vorgesehen, daß die Energiequelle (2) eine Licht-Emitter-Diode (LED) ist.

Mit dieser Vorrichtung ist auf kostengünstige Weise eine dauerhafte Verbindung der Bauteile miteinander erzielbar, wobei die Vorteile des Laserschweißens realisierbar sind.

## Beschreibung

Die Erfindung betrifft eine Vorrichtung zum dauerhaften Verbinden zumindest zweier Bauteile miteinander, umfassend wenigstens eine Energiequelle zum Bereitstellen einer die Verbindung herstellenden Energie.

Dauerhafte Verbindungen werden beispielsweise durch Verlötungen bzw. Verschweißungen hergestellt. Die Dauerhaftigkeit der Verbindungen wird dadurch erreicht, daß die miteinander zu verbindenden Bauteile abschnittsweise erwärmt und dadurch verflüssigt werden, so daß die Materialien beider Bauteile eine ineinandergreifende Verbindung eingehen können, wenn die Bauteile wieder erkalten. Dem Erwärmen dient die Energiequelle.

Neben dem elektrischen Schweißen ist auch das Schweißen mit einem Laser bekannt. Das Laserschweißen hat gegenüber dem Heizelementschweißen und anderen Schweißarten den Vorteil, daß keine mechanische Beanspruchung der Bauteile auftritt und daß aufgrund des örtlich begrenzten Wärmeeintrages ein nahezu verschleißfreies Verfahren gegeben ist. Das Schweißen erfolgt berührungslos, es sind Werkstoffe mit unterschiedlichen Viskositäten mit einander verbindbar.

Nachteilig beim Laserschweißen ist allerdings, daß eine Laservorrichtung benötigt wird, welche kostenaufwendig ist. Zudem sind bei der Verwendung von Laserstrahlen besondere Vorsichtsmaßnahmen zu treffen, um die Sicherheit der im Bereich der Vorrichtung Arbeitenden zu gewährleisten.

Der Erfindung liegt die Aufgabe zugrunde, eine Vorrichtung der Eingangs genannten Gattung aufzuzeigen, mit der auf kostengünstige Weise die Vorteile des Laserschweißens erzielbar sind.

Diese Aufgabe ist erfindungsgemäß dadurch gelöst, daß die Energiequelle eine Licht-Emitter-Diode (LED) ist.

Die erfindungsgemäße Vorrichtung weist somit keine komplizierte und teure Lasereinrichtung auf, sondern wenigstens eine Licht-Emitter-Diode. Eine Licht-Emitter-Diode ist günstig, für ihren Betrieb ist keine große Energiemenge erforderlich. Der Einsatz von Licht-Emitter-Dioden verlangt geringere Schutzmaßnahmen als der Einsatz von Laserstrahlen, zugleich ist aber auch mit der Licht-Emitter-Diode ein berührungsloses Verbinden zumindest zweier Bauteile ermöglicht, nämlich durch ein Verschweißen. Es erfolgt ein geringer, örtlich begrenzter Wärmeeintrag, der durch vorzugsweise mehrere Licht-Emitter-Dioden erbringbar ist. Eine mechanische Beanspruchung der Bauteile findet nicht statt.

Die Fügung der Bauteile erfolgt durch eine Umwandlung von Strahlungsenergie in Wärmeenergie durch Absorption der Strahlungsenergie im Material der Bauteile. Es entsteht eine lokal begrenzte Schmelze in einem Verbindungsbereich.

Nach einer ersten Weiterbildung der Erfindung ist dabei vorgesehen, daß die Licht-Emitter-Diode über zumindest eine Lichtwellen leitende Optik mit dem Verbindungsbereich der Bauteile lichtwellenleitend verbunden ist. Das von den Licht-Emitter-Dioden erzeugte Licht wird von der Optik in den Verbindungsbereich der Bauteile geführt und in diesen eingeleitet. Dabei wird mit der Lichtwellen leitenden Optik eine Lichtverteilung vorgenommen, um die punktförmige Lichtquelle LED in eine gleichmäßig leuchtende Fläche zu verwandeln. Dadurch wird kostengünstig eine simultane Verschweißung einer gesamten Schweißnaht erreicht, und es wird die erforderliche Prozeßzeit gegenüber üblichen Lösungen mit Lasereinrichtungen gesenkt.

Um eine feste Verbindung zwischen den Bauteilen zu erreichen, sind geeignete Materialien für die Bauteile auszuwählen. So sieht eine Weiterbildung der Erfindung vor, daß die miteinander zu verbindenden Bauteile aus ein und demselben oder aus voneinander verschiedenen Kunststoffen gefertigt sind. Die Kunststoffe können technische Polymere sein. Es ist möglich, in die Kunststoffe Zusätze einzuarbeiten, um farbige Kunststoffe herzustellen, die für das menschliche Auge gleich aussehen, aber dennoch voneinander verschiedene Absorptionsverhalten aufweisen. Es kann beispielsweise vorgesehen sein, daß zumindest eines der zu verbindenden Bauteile transparent ist und zumindest eines der zu verbindenden Bauteile nicht transparent ist. Mit dem Licht der Licht-Emitter-Dioden wird dann zunächst das transparente Bauteil durchstrahlt, durch welches das Licht hindurchtritt und anschließend auf das nicht transparente Bauteil trifft. Dieses vom Laserschweißen her bekannte Durchstrahlverfahren ist auch beim LED-Schweißen mit der erfindungsgemäßen Vorrichtung ermöglicht. Für eine Licht-Emitter-Diode wird dabei jedoch nur eine Leistung von nur etwa 3 Watt bis 10 Watt benötigt.

Zur weiteren Ausbildung der Erfindung ist vorgesehen, daß die Lichtwellen leitende Optik eine Focussiereinheit umfaßt, welche in Lichtwellenleitungsrichtung vor dem Verbindungsbereich der Bauteile angeordnet ist. Durch diese Focussiereinheit wird erreicht, daß das Licht in dem Verbindungsbereich auf das absorbierende Kunststoffmaterial fokussiert ist.

Die Lichtwellen leitende Optik kann dabei Lichtwellenleiter aus PMMA, PC und ähnlichen Kunststoffen enthalten. Vorzugsweise ist der Lichtwellenleiter bzw. die Lichtwellen leitende Optik aus Glas gefertigt, um Verluste und damit eine Erwärmung an unerwünschten Orten zu vermeiden. Glas läßt sich zudem umformend oder spanend bearbeiten, so daß eine hohe Gestaltungsfreiheit für die Lichtwellen leitende Optik gegeben ist.

Zur weiteren konstruktiven Ausbildung schlägt eine Weiterbildung der Erfindung vor, daß die Vorrichtung eine Halteeinrichtung für die miteinander zu verbindenden Bauteile aufweist und daß diese Halteeinrichtung rahmenartig umgebende Licht-Emitter-Dioden als Energiequellen vorgesehen sind. Konstruktiv werden somit mehrere Licht-Emitter-Dioden eingesetzt. Diese sind rahmenartig angeordnet, so daß sie den Verbindungsbereich der beiden Bauteile umfassen. Der Verbindungsbereich kann dabei auch rahmenartig ausgebildet sein, beispielsweise als umlaufende Schweißnaht für zwei miteinander zu verbindende Bauteile. Mit den rahmenartig angeordneten Licht-Emitter-Dioden ist eine rahmenartige Schweißnaht herstellbar, indem diese Licht-Emitter-Dioden gleichzeitig betrieben werden. Es erfolgt eine Einleitung des Lichtes dieser Licht-Emitter-Dioden über die Lichtwellen leitende Optik simultan in den gesamten Verbindungsbereich. Die Optik sorgt dabei für ein gleichmäßiges Einbringen des Lichtes in den Verbindungsbereich. Das Licht der Licht-Emitter-Dioden weist dabei eine gleiche Wellenlänge auf, ähnlich wie beim Laser, durch die Lichtwellen leitende Optik wird auch eine Kohärenz ähnlich wie beim Laser erreicht.

Zur weiteren Ausbildung der Erfindung ist schließlich vorgesehen, daß die Schweißnaht eine Kappe mit einem Sockel für ein elektronisches Bauteil, vorzugsweise für einen Mikroschalter, verbindet. Die für den Schweißvorgang erforderliche Fügekraft wird dabei durch eine überschneidende Auslegung der zu fügenden Bauteile erreicht.

Ein Ausführungsbeispiel der Erfindung, aus dem sich weitere erfinderische Merkmale ergeben, ist in der Zeichnung dargestellt. Es zeigen:
- Fig.1:: eine schematische Draufsicht der erfindungsgemäßen Vorrichtung und
- Fig. 2:: eine Teilseitenansicht der Vorrichtung gemäß Figur 1.

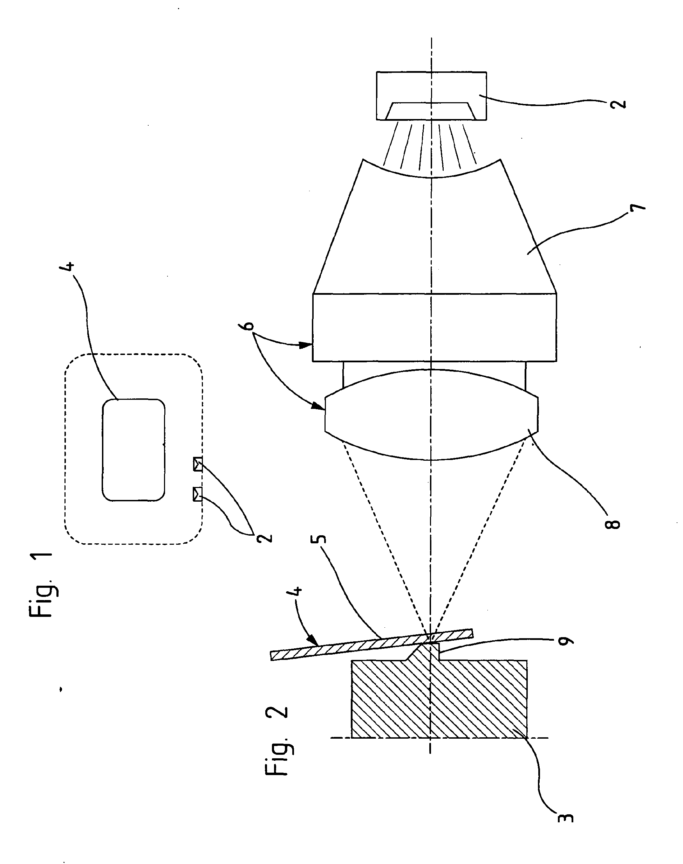

Figur 1 zeigt eine erfindungsgemäße Vorrichtung zum dauerhaften Verbinden zweier Bauteile. Ein Bauteil Aufsetzkappe 4 ist in dieser Figur in Draufsicht dargestellt, die Bauteile werden auch in Figur 2 gezeigt. Die Aufsetzkappe 4 in Figur 1 ist in einer Halteeinrichtung gehalten, wobei sie von einer Vielzahl Licht-Emitter-Dioden 2 rahmenartig umgeben ist. Das von den Licht-Emitter-Dioden 2 ausgesandte Licht wird simultan an die Halteeinrichtung herangeführt, auf dieser Halteeinrichtung befindliche Bauteile können mit diesem Licht miteinander verschweißt werden.

Figur 2 zeigt die Bauteile Sockel 3 für einen Mikroschalter und die Aufsetzkappe 4 für diesen Mikroschalter. Einem in Figur 2 dargestellten transparenten Abschnitt der Kappenwand 5 ist eine Licht-Emitter-Diode 2 zugeordnet. Zwischen der Licht-Emitter-Diode 2 und der Kappenwand 5 ist eine Lichtwellen leitende Optik 6 angeordnet, welche einen aus Glas gefertigten Lichtwellenleiter 7 und eine Focussiereinheit 8 umfaßt. Die Lichtwellen leitende Optik 6 ist in einem definierten Abstand zur Kappenwand 5 und der Oberfläche des Sockels 3 angeordnet, welcher der Brennweite der linsenartig ausgebildeten Focussiereinheit 8 entspricht. Die mehreren Licht-Emitter-Dioden 2 in Figur 1 sind in einer umlaufenden Kontur angeordnet, in der jede einer Licht-Emitter-Diode 2 zugeordnete Lichtwellen leitende Optik 6 im optimalen Abstand zur Oberfläche der miteinander zu verbindenden Bauteile angeordnet ist.

Der Sockel 3 weist in seiner der Kappenwand 5 zugekehrten Oberfläche einen Vorsprung 9 auf. An diesem Vorsprung 9 liegt die Kappenwand 5 mit einer Vorspannung an, der Anlagebereich ist zugleich der Verbindungsbereich beider Bauteile. Das Licht der Licht-Emitter-Diode 2 wird in diesen Bereich fokussiert. Das Fokussieren erfolgt über den gesamten Umfang von Sockel 3 und Aufsetzkappe 4. In Figur 1 ist lediglich die Aufsetzkappe 4 gezeigt, welche sich über den Sockel 3 schiebt. Mit einem Verschweißen von Sockel 3 und Aufsetzkappe 4 erfolgt eine dichte Verbindung beider Bauteile, welche luft-und flüssigkeitsdicht ist. Die Verbindung erfolgt dabei durch den LED-Schweißvorgang, auf andere Verbindungsarten, wie mechanische Rastungen oder Verklebungen, kann verzichtet werden.

## Patentansprüche

1. Vorrichtung zum dauerhaften Verbinden zumindest zweier Bauteile miteinander, umfassend wenigstens eine Energiequelle zum Bereitstellen einer die Verbindung herstellenden Energie,
**dadurch gekennzeichnet,**
**daß** die Energiequelle eine Licht-Emitter-Diode (LED) (2) ist.

2. Vorrichtung nach Anspruch 1, **dadurch gekennzeichnet, daß** die Licht-Emitter-Diode (2) über zumindest eine Lichtwellen leitende Optik (6) mit dem Verbindungsbereich der Bauteile lichtwellenleitend verbunden ist.

3. Vorrichtung nach Anspruch 1 oder 2, **dadurch gekennzeichnet, daß** die miteinander zu verbindenden Bauteile aus ein und demselben oder aus voneinander verschiedenen Kunststoffen gefertigt sind.

4. Vorrichtung nach Anspruch 3, **dadurch gekennzeichnet, daß** die Licht-Emitter-Diode (2) eine Leistungsaufnahme von etwa 3 W bis 10 W hat.

5. Vorrichtung nach einem der vorhergehenden Ansprüche, **dadurch gekennzeichnet, daß** zumindest eines der zu verbindenden Bauteile transparent und zumindest eines der zu verbindenden Bauteile nicht transparent ist.

6. Vorrichtung nach einem der Ansprüche 2 bis 5, **dadurch gekennzeichnet, daß** die lichtwellenleitende Optik (6) eine Focussiereinheit (8) umfaßt, welche in Lichtwellenleitungsrichtung vor dem Verbindungsbereich der Bauteile angeordnet ist.

7. Vorrichtung nach Anspruch 6, **dadurch gekennzeichnet, daß** die lichtwellenleitende Optik (6) ein Glas gefertigten Lichtwellenleiter (7) aufweist.

8. Vorrichtung nach einem der vorhergehenden Ansprüche, **dadurch gekennzeichnet, daß** sie eine Halteeinrichtung für die miteinander zu verbindenden Bauteile aufweist und daß diese Halteeinrichtung rahmenartig umgebende Licht-Emitter-Dioden (2) als Energiequellen vorgesehen sind.

9. Vorrichtung nach Anspruch 8, **dadurch gekennzeichnet, daß** mit den rahmenartig angeordneten Licht-Emitter-Dioden (2) eine rahmenförmige Schweißnaht herstellbar ist.

10. Vorrichtung nach Anspruch 9, **dadurch gekennzeichnet, daß** die Schweißnaht eine Kappe (4) mit einem Sockel (3) für ein elektronisches Bauteil, vorzugsweise für einen Mikroschalter, miteinander verbindet.
